# EUROPÄISCHE PATENTSCHRIFT

(11) **EP 3 356 100 B1**
(45) Veröffentlichungstag und Bekanntmachung des Hinweises auf die Patenterteilung: **18.08.2021**
(21) Anmeldenummer: 16778286.1
(22) Anmeldetag: 30.09.2016
(51) Int. Cl.: B27N 7/00, B05C 5/02

(54) **VERFAHREN SOWIE VORRICHTUNG ZUR SCHMALFLÄCHENBESCHICHTUNG**
METHOD AND DEVICE FOR EDGE COATING
PROCÉDÉ ET DISPOSITIF DE REVÊTEMENT DE SURFACES ÉTROITES

(30) Priorität: 02.10.2015 DE 102015219108
(43) Veröffentlichungstag der Anmeldung: 08.08.2018
(73) Patentinhaber: HOMAG GmbH, 72296 Schopfloch (DE)
(72) Erfinder: GRINGEL, Martin, 72479 Straßberg (DE); FETSCHER, Dr. Joachim, 72296 Schopfloch (DE); VOLM, Matthias, 72336 Balingen (DE); BETTERMANN, Thomas, 33699 Bielefeld (DE)
(74) Vertreter: Hoffmann Eitle
(86) Internationale Anmeldenummer: PCT/EP2016/073438
(87) Internationale Veröffentlichungsnummer: WO 2017/055561

(56) Entgegenhaltungen:
- EP-A1- 0 744 260
- EP-A1- 2 374 587
- WO-A1-00/53387
- DE-A1- 1 937 847
- DE-A1- 2 233 322
- DE-A1- 10 144 524
- DE-A1- 19 543 901
- IT-A1- BO20 100 146
- US-A- 3 907 624
- US-A- 4 378 170
- US-A1- 2003 224 078
- US-A1- 2012 180 718

## Beschreibung

### TECHNISCHES GEBIET

Die vorliegende Erfindung betrifft ein Verfahren gemäß dem Oberbegriff des Patentanspruchs 1, zur Schmalflächenbeschichtung bzw. zur Erstellung eines Kantenverschlusses an der Schmalfläche von vorzugsweise plattenförmigen Werkstücken. Bei den genannten Werkstücken kann es sich insbesondere um Elemente bzw. Bauteile aus der Möbel- bzw. Bauelementeindustrie handeln. Beispielsweise handelt es sich bei den genannten Bauteilen um Küchenarbeitsplatten, Einlegebretter, Fußbodenpaneele, Möbelfronten usw.

### STAND DER TECHNIK

Ein Verfahren gemäß dem Oberbegriff des Patentanspruchs 1 und eine Vorrichtung gemäß dem Oberbegriff des Patentanspruchs 8 gehen beispielsweise aus der DE 19 37 847 A1 hervor. Es ist bekannt, die Schmalseite von plattenförmigen Werkstücken mit einem Kantenstreifen zu versehen. Dabei werden die Kantenstreifen auf Rollen gelagert und zur Verarbeitung von einer solchen Rolle abgezogen. Nachdem die Variantenvielfalt der Kantenstreifen immer weiter zunimmt, erfordert die Lagerhaltung und die Bereitstellung der verschiedenen Kantenstreifen an einer Verarbeitungsmaschine zur Aufbringung der Kantenstreifen an plattenförmigen Werkstücken einen hohen logistischen Aufwand mit entsprechenden Kosten.

Im Stand der Technik wurde deshalb bereits erwogen, den Herstellungsprozess des Kantenstreifens zeitlich und örtlich annähernd mit der Anbringung des Kantenstreifens zu vereinen. Insbesondere ist als Stand der Technik das Dokument WO 00/53387 A1 bekannt, welches ein Verfahren sowie eine Vorrichtung zum Aufbringen eines Kunststoff-Kantenstreifens an einem plattenförmigen Werkstück zeigt. Hierzu umfasst die Vorrichtung einen Extruder, der einen extrudierten Streifen bereitstellt. Der extrudierte Streifen ist insbesondere aus einem weichen PVC-Material.

Unmittelbar stromabwärts des Extruders und nahe genug, damit der extrudierte Streifen lediglich geringfügig abgekühlt und ausreichend warm bleibt, um verformt zu werden, befindet sich eine Formstation. Die Formstation umfasst eine Walze, mit der der extrudierte Streifen verformt wird.

Allerdings hat das bekannte Vorgehen den Nachteil, dass eine weitgehend kontinuierliche Generierung des extrudierten Streifens stattfindet und eine strukturelle Formgebung in einem nachfolgenden Verfahrensschritt im Bereich der Formstation erforderlich ist.

### GEGENSTAND DER ERFINDUNG

Ziel der vorliegenden Erfindung ist es deshalb, eine Schmalflächenbeschichtung bei hoher Flexibilität zu vereinfachen, und in kosteneffizienter Weise eine qualitativ hochwertige Beschichtung an insbesondere plattenförmigen Werkstücken bereitstellen zu können.

Anspruch 1 stellt ein Verfahren gemäß der Erfindung bereit, mit dem zumindest eines der zuvor genannten Ziele erreicht wird.

Der Erfindung liegt der Gedanke zugrunde, zur Herstellung des Schmalflächenverschlusses bei vorzugsweise plattenförmigen Werkstücken ggf. auf ein Kantenbandmaterial verzichten bzw. relativ dünne Kantenbandmaterialien einsetzen zu können. Der Schmalflächenverschluss bzw. die Schmalflächenbeschichtung erfolgt demnach mittels eines generativen Verfahrens. Durch das generative Verfahren können die bisherigen Kantenmaterialen und -profile ersetzt bzw. neue Kombinationen realisiert werden. Darüber hinaus ist es möglich, die poröse Schmalseite eines Werkstücks zu verdichten bzw. veredeln.

Der Begriff "Breite der Schmalseite" bedeutet im Rahmen der Erfindung im Wesentlichen ein Abstand zwischen zwei Hauptseiten eines Werkstücks oder mit anderen Worten eine Dicke des plattenförmigen Werkstücks.

Nachdem das Werkstück mit einer Masse versehen wird, welche Masse beispielsweise Kunststoff, Holzmaterial, wie Holzschaum, Holzmehl, Sägespäne oder Ähnlichem, eine metallische oder mineralische Paste, oder Kombinationen hieraus umfasst, können die nachfolgend genannten Vorteile erreicht werden:
- Individuelle Gestaltung der Materialkonsistenz und Farbeigenschaften in Abhängigkeit des Werkstückes.
- Substitution von Kantenmaterial sowie Einsparung kostenintensiver Kantenstreifenbevorratung.
- Kantenmagazin zum Zuführen und Aufbringen von Kantenmaterialstreifen sowie Vorkappstation an Maschine kann entfallen.
- Entfall von Stößen; Kappen entfällt

Ein dreidimensionaler Körper im Sinne der vorliegenden Erfindung weist senkrecht zur Oberfläche des zu beschichtenden Werkstücks betrachtet bevorzugt eine Dicke von mindestens 100µm auf.

Die erfindungsgemäße Auftragseinheit ist derart ausgebildet, dass der Aufbringbereich einstellbar bzw. variierbar ist, beispielsweise durch Verändern der Begrenzungsstruktur der Auftragseinheit, durch Austausch eines Elements der Auftragseinheit, oder durch Ansteuern einer bestimmten Anzahl von Düsen der Auftragseinheit bzw. Variieren der Düsenöffnungsgröße.

In einer bevorzugten Ausführungsform handelt es sich bei der Masse um einen thermoplatischen, duroplastischen oder elastomeren Kunststoff. Alternativ sind jedoch ferner ligninhaltiges Material wie Holzmaterial, insbesondere Holzschaum, Holzmehl, Schleifstaub, Sägespäne, Zellulose, WPC, Holzfasern oder Kombinationen aus den erwähnten Werkstoffen oder ähnliches im Rahmen der Erfindung einsetzbar. Ferner kann es sich bei der Masse um Metallpasten -oder schäume, Kunststoffpasten oder -schäume, Betonmaterial, oder elektrisch leitende Materialien wie Kupferpaste oder einen elektrisch leitenden Kunststoff handeln. Ferner können kohlefaserhaltige Werkstoffe zum Einsatz kommen.

Ferner kann es vorgesehen sein, dass eine Schmalseitenbeschichtung abschnittsweise mit verschiedenen Materialien erfolgen, oder die Materialien werden vor deren Auftrag gemischt. In weiteren Ausführungsformen ist es vorgesehen, als Material zur Schmalseitenbeschichtung Aluschaum, Kunststoffschaum, usw. zu verwenden.

Ein Vorteil der vorliegenden Erfindung ist es, dass die Masse in die poröse Schmalseite des Werkstücks eindringen und diese verschließen kann. Auf diese Weise werden zum einen Unebenheiten ausgeglichen, und zum anderen wird verhindert, dass Feuchtigkeit in den Werkstoff des zu beschichtenden Werkstücks eindringt.

Darüber hinaus ist es möglich, in einem oder in mehreren Durchgängen, mehrere - ggf. unterschiedliche -Massen auf dem Werkstück aufzutragen, die auch aus unterschiedlichen Materialeigenschaften bestehen können. Beispielsweise kann abschnittsweise oder schichtweise eine Masse zum Einsatz kommen, die zur Energieübertragung genutzt wird. Somit könnten Mobilfunktelefone mit der Möglichkeit der induktiven Aufladung geladen werden, wobei die hierfür erforderliche Energie zumindest teilweise über eine Schmalseite eines Werkstücks wie einem Einlegebrett eines Regals geführt, oder ein zur induktiven Aufladung vorbereitetes Telefon an dieser Stelle aufgeladen wird.

Insbesondere zur Versteifung einer dünnen Möbelplatte und zur Reduzierung von Kosten ist es vorteilhaft, eine Masse minderer Qualität und geringere Dichte, wie z.B., Schäume, einzusetzen. Hierzu werden entsprechende Düsen mit unterschiedlichen Querschnitten und Anordnung verwendet.

Denkbar ist, dass offene Poren abschnittsweise an den Breitseiten des Werkstückes verschlossen werden. Ebenso sind auftragende Strukturen (Erhebungen) an den Breitseiten des Werkstückes anbringbar.

Gemäß einer bevorzugten Ausführungsform wird nach dem Aufbringen der Masse mit der Auftragseinheit eine Inkjet-Druckeinrichtung eingesetzt, mit der das Werkstück und/oder ein durch die Auftragseinheit ausgebildeter dreidimensionaler Körper (Volumenkörper) bedruckt oder mit Schicht, insbesondere einem Lack, versehen wird. Auf diese Weise kann eine weitere Veredelung des Werkstücks bereitgestellt werden.

Die Masse wird vorzugsweise mittels einer sog. Andruckwalze, einem Druckschuh oder einem Rakel an bzw. in die Schmalseite des Werkstücks gedrückt. Im Zuge dessen kann gleichzeitig oder in einem weiteren Schritt eine Struktur in die Masse eingebracht werden.

Gemäß einer Ausführungsform wird die Relativbewegung zwischen dem Werkstück und der Auftragseinheit kontinuierlich oder diskontinuierlich durchgeführt, während die Auftragseinheit die Schmalseite des Werkstücks mit der Masse versieht.

Ebenso ist es denkbar, dass die über die Schmalseite überstehende Masse mittels einem Formmittel (Formschuh, drehbaren Profilwalze) abgestreift, oder die überstehende Masse in ein gewünschtes "Kantenprofil" (z.B. Tonnen-, U-, S-profil) gebracht wird. Dies erfolgt mindestens in einem Durchlauf. Bei mehreren Durchläufen kann auch ein Abkühlen der zuvor eingebrachten Masse stattfinden. Hierbei kann die Masse zwischen der in die Schmalseite eingebrachten und der "Kantenprofilmasse" hinsichtlich der Materialeigenschaften, Konsistenz und Farbe unterschiedlich sein.

Obwohl es gemäß einer Zielrichtung der vorliegenden Erfindung vorgesehen ist, dass mit der aufgetragenen Masse konventionelle Kantenbänder ersetzt werden können, ist es gemäß einer weiteren Zielrichtung denkbar, dass die Masse sowohl als Füllmasse für das Ausfüllen und Verschließen der offenporigen /porösen Schmalseite Poren benutzt wird, sowie als Klebemasse, wobei durch Additive der Masse zusätzlich Klebeeigenschaften verliehen werden. Hierdurch ist es möglich, ein separates Beschichtungsmaterial (Kantenmaterial) unmittelbar nach dem Aufbringen der Masse durch Andrücken mit dem Werkstück zu verbinden. Als dekorative Schicht kann auch eine Folie bzw. ein Kantenmaterial aufgebracht werden. Ebenso ist es möglich, dass der Klebstoff bereits auf dem Kantenmaterial aufgebracht wurde und durch Aktivierung mit der Masse verbunden wird.

Von Vorteil ist es, wenn die ausgehärtete Masse spanend (Fräsen, Schleifen) nachbearbeitet wird. Auch ein Lackauftrag (Schutz, Farbe) ist von Vorteil.

Von Vorteil ist es, wenn die Masse mittels Mikrowelle, Laserstrahlung, IR, Plasma, Heißluft, Mikrowelle in einen fließfähigen oder pastösen Zustand versetzt wird, um eine schnelle Verarbeitung zu ermöglichen. Auf diese Weise ist es möglich, Werkstücke - die im Falle einer Durchlaufeinrichtung mit einer Lücke getrennt gefördert werden - präzise mit der Masse zu versehen.

Von Vorteil ist es ferner, wenn die Masse mittels Mikrowelle, Laserstrahlung, IR, Plasma, Heißluft, Mikrowelle ausgehärtet wird, um eine schnelle Weiterverarbeitung der Masse bzw. eine einfachere Handhabung der Werkstücke zu sichern.

Weiterhin ist es möglich, die Masse derart auszubilden, dass diese als Verbindungselement/Funktionsteil (z.B. Beschlagsteil) eingesetzt werden kann.

Ferner stellt Anspruch 8 eine Vorrichtung gemäß der Erfindung bereit, die aufweist:
eine Auftragseinheit, wobei die Auftragseinheit zur Aufbringung der Masse an einer Schmalseite eines Werkstücks (W) eingerichtet ist, und zum Einstellen eines Aufbringungsbereichs der Auftragseinheit einstellbar ist, insbesondere in Abhängigkeit von der Breite der Schmalseite des Werkstücks. Die Einstellung des Aufbringbereichs kann durch eine Steuereinrichtung initiiert werden, beispielsweise durch Verändern der Begrenzungsstruktur der Auftragseinheit, durch Austausch eines Elements der Auftragseinheit, oder durch Ansteuern einer bestimmten Anzahl von Düsen der Auftragseinheit bzw. Variieren der Düsenöffnungsgröße. Ferner umfasst die Vorrichtung eine Zuführeinrichtung zur Zuführung einer Masse zur Auftragseinheit und eine Vorrichtung zur Herbeiführung einer Relativbewegung zwischen einem Werkstück und der Auftragseinheit.

Die Vorrichtung ist zur Durchführung des in Anspruch 1 aufgeführten Verfahrens eingerichtet. Weitere bevorzugte Ausführungsformen der Vorrichtung sind in den weiteren abhängigen Ansprüchen aufgeführt.

Bevorzugt weist die Auftragseinheit mindestens eine Düsenanordnung auf, welche mindestens abschnittsweise die Schmalseite mit der Masse beaufschlagt, wobei die Düsenanordnung vorzugsweise horizontal angeordnet ist. Die Düsenanordnung kann eine oder mehrere Düsen aufweisen.

Ferner kann eine Speichereinrichtung zur Aufnahme der Masse vorgesehen sein, die mit der Zuführeinrichtung verbunden ist, wobei die Speichereinrichtung eine Heizeinrichtung aufweist. Die Speichereinrichtung kann an der Zuführeinrichtung angeordnet oder beabstandet zu dieser vorgesehen sein.

In einer Ausführungsform ist die Auftragseinheit in eine Werkzeugaufnahme einwechselbar ist. Auf diese Weise kann die Auftragseinheit ausgetauscht werden.

Ferner können ein Bearbeitungswerkzeug, insbesondere ein Fräser oder eine Ziehklinge, und die Auftragseinheit an einem gemeinsamen Schlitten angebracht sein, der entlang einer Führung verfahrbar ist. Somit kann eine Bearbeitung beschleunigt werden.

Ferner umfasst die Vorrichtung eine Andruckrolle zum Andrücken der Masse an die Schmalseite des Werkstücks. Somit kann die Oberfläche der Masse weiter veredelt bzw. verdichtet werden. Gemäß einem weiteren Aspekt ist es möglich, eine Strukturierung in die Masse einzubringen.

Die Auftragseinheit kann einen Basisabschnitt, einen ersten Justierabschnitt sowie einen zweiten Justierabschnitt aufweisen, wobei der erste Justierabschnitt und der zweite Justierabschnitt jeweils relativ zum Basisabschnitt verstellt werden können, um den Aufbringungsbereich der Auftragseinheit einzustellen.

Gemäß einer weiteren Ausführungsform ist es vorgesehen, dass der erste Justierabschnitt eine gegenüber einer Basisfläche des Basisabschnitts geneigte Fläche oder gekrümmte Fläche (12b) und der zweite Justierabschnitt eine gegenüber einer Basisfläche des Basisabschnitts geneigte Fläche oder gekrümmte Fläche aufweist.

Zusätzlich könnten die geneigten Flächen bzw. gekrümmten Flächen bevorzugt relativ zum Basisabschnitt schwenkbar sein.

### KURZE BESCHREIBUNG DER FIGUREN

- Fig. 1: zeigt eine beispielhafte Ausführungsform der vorliegenden Erfindung
- Fig. 2: zeigt eine weitere Ausführungsform der vorliegenden Erfindung
- Fig. 3: stellt eine weitere Variante der vorliegenden Erfindung dar
- Fig. 4: veranschaulicht eine andere Variante der vorliegenden Erfindung

### DETAILLIERTE BESCHREIBUNG DER BEVORZUGTEN AUSFÜHRUNGSFORMEN

Nachfolgend werden anhand der beigefügten Figuren beispielhafte Ausführungsformen der vorliegenden Erfindung beschrieben. Modifikationen einzelner Merkmale können dabei jeweils einzeln miteinander kombiniert werden, um neue Ausführungsformen auszubilden.

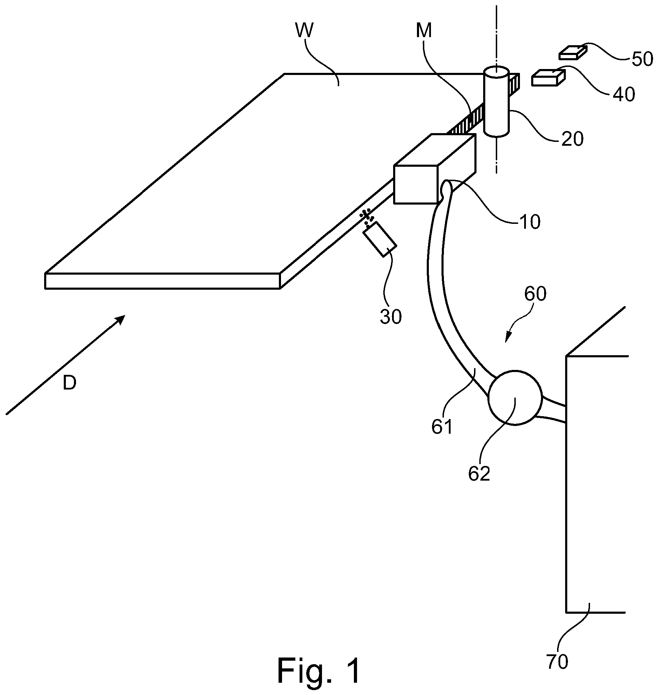

Ein plattenförmiges Werkstück W (beispielsweise eine Küchenarbeitsplatte, eine Möbelfront oder Ähnliches) wird in der dargestellten Ausführungsform mittels einer Fördereinrichtung, insbesondere eines Transportriemens oder einer Transportkette, bewegt. Die Bewegungsrichtung ist in Figur 1 mit dem Bezugszeichen D gekennzeichnet. In Durchlaufrichtung D befindet sich zunächst ein Vorbehandlungsmodul 30, mit dem eine nachfolgende Bearbeitung einer Schmalseite des Werkstücks W vorbereitet wird. Gemäß einer Ausführungsform wird mit dem Vorbehandlungsmodul 30 ein Druckluftstrahl auf die Schmalseite des Werkstücks W gerichtet, um Späne oder ähnliche Verunreinigungen von der Schmalseite des plattenförmigen Werkstücks zu entfernen.

Ferner umfasst die Vorrichtung eine Auftragseinheit 10. Die Auftragseinheit 10 ist mit einer Zuführeinrichtung 60 verbunden, mittels welcher Zuführeinrichtung 60 eine fließfähige Masse M von einem Speicher 70 zur Auftragseinheit 10 gefördert wird. Die Zuführeinrichtung 60 umfasst dabei zumindest eine Leitung 61, die in der vorliegenden Ausführungsform als flexibler Schlauch ausgebildet ist, sowie gegebenenfalls eine Pumpeinrichtung 62. Alternativ kann eine Pumpeinrichtung auch im Bereich des Speichers 70 oder der Auftragseinheit 10 vorgesehen sein.

Der Aufbringbereich der Auftragseinheit kann eingestellt bzw. variiert werden, indem ein Element der Auftragseinheit oder die Auftragseinheit selbst ausgetauscht wird, oder eine bestimmte Anzahl von Düsen der Auftragseinheit angesteuert bzw. der Düsenöffnungsgröße variiert wird.

In Durchlaufrichtung D eines Werkstücks W nachrangig ist ferner eine Andrückeinrichtung 20 in Form einer Andruckrolle vorgesehen. Die Drehachse der Andruckrolle versteckt sich dabei in vertikaler Richtung. Bevorzugt ist die Drehachse der Andruckrolle 20 in Richtung des Werkstücks W und von diesem weg bewegbar. Auf diese Weise kann zum einen eine Andrückkraft variiert und zum anderen der gegebenenfalls unterschiedlichen Dicke der aufgetragenen Masse Rechnung getragen werden.

Die Andruckrolle 20 ist gemäß der vorliegenden Ausführungsform als zylinderförmiger Körper mit konstantem Durchmesser ausgebildet. Gemäß einer alternativen Ausführungsform kann die Andruckrolle jedoch auch einen variierenden Durchmesser aufweisen.

Beispielsweise können mit der Andruckrolle 20 Radien im Bereich der Ecken der plattenförmigen Werkstücke durch Umformen der bereits auf der Schmalseite befindlichen und gegebenenfalls bereits teilweise ausgehärteten Masse eingebracht werden.

Auch ist es möglich, eine Andruckrolle in Form einer Prägewalze einzusetzen, mit der eine Profilierung in die auf die Schmalseite aufgetragene Masse eingedrückt wird. Mittels der Profilierung kann die mit der Masse versehene Schmalseite des Werkstücks W zusätzlich mit einer haptisch auf das Dekor abgestimmten Eigenschaft versehen werden. Beispielsweise kann eine Profilierung in die Masse eingebracht werden, mit der haptisch und/oder optisch eine Holzoberfläche imitiert wird.

In Durchlaufrichtung D der Andruckrolle 20 nachgeordnet befindet sich in der Vorrichtung gemäß der vorliegenden Ausführungsform ein Veredelungsmodul 40. Ein derartiges Veredelungsmodul kann vielfältig ausgestaltet sein, beispielsweise als Heizeinrichtung, UV-Strahler oder einer Kühleinrichtung.

Mittels einem als Heizeinrichtung ausgebildeten Veredelungsmodul kann die auf die Schmalseite aufgebrachte Masse nochmals angewärmt werden, um deren Oberflächeneigenschaften zu verbessern oder die Masse für eine weitere Bearbeitung in einem pastösen oder zumindest teilweise verformbaren Zustand zu halten bzw. zu bringen.

Ein UV-Strahler wiederrum wird eingesetzt, um eine mit UVvernetzenden Partikeln versehene Masse M zügiger aushärten zu können.

Darüber hinaus können mit dem Veredelungsmodul 40 weitere nachrangige Bearbeitungsschritte vorbereitet werden, beispielsweise durch Reinigen, Entfetten, Verbessern der Haftungs- und Benetzungseigenschaften und/oder Vermindern der elektrostatischen Aufladung.

Gemäß der vorliegenden Ausführungsform umfasst die in Figur 1 dargestellte Vorrichtung ferner eine Inkjet-Druckeinrichtung 50. Die Inkjet-Druckeinrichtung 50 wird verwendet, um auf die auf der einen Schmalseite des Werkstücks W aufgebrachte Masse eine Dekoroberfläche aufzubringen. Die Dekoroberfläche kann beispielsweise mit einer mittels der Andruckrolle 20 in die Masse eingebrachten Struktur abgestimmt werden. In einem konkreten Beispiel wird dabei mittels der Andruckrolle 20 eine für eine Holzoberfläche charakteristische Oberflächenstruktur eingeprägt, und die entsprechend vorbereitete Oberflächenstruktur mit einem in optischer Hinsicht eine Holzoberfläche imitierenden Dekor versehen.

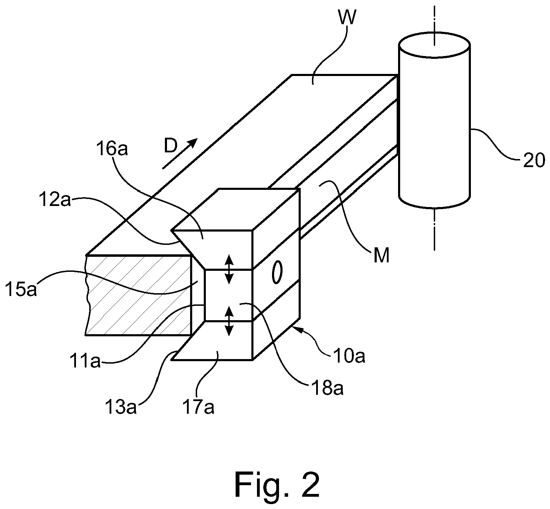

In Figur 2 wird eine weitere Ausführungsform gemäß der vorliegenden Erfindung dargestellt. Die in Figur 2 dargestellte Ausführungsform unterscheidet sich dabei unter anderem durch die Ausgestaltung der Auftragseinheit 10a von derjenigen, die in Figur 1 gezeigt wird.

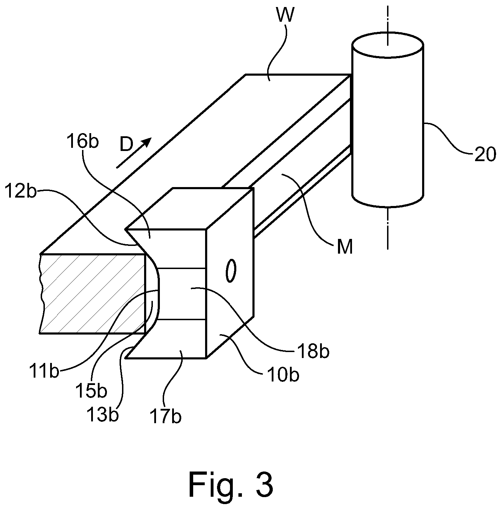

Weitere Baugruppen, wie das Vorbehandlungsmodul 30, das Veredelungsmodul 40, die Ink-Jet-Druckeinrichtung 50, die Zuführeinrichtung 60 sowie der Speicher 70, können jeweils einzeln auch bei der in Figur 2 dargestellten Ausführungsform zum Einsatz kommen. Entsprechendes gilt für die weiteren Ausführungsformen in Figuren 3-4.

Die Auftragseinheit 10a bildet in Richtung eines mit der Masse M zu versehenden Werkstück W eine trichterförmige Gestalt aus. Insbesondere umfasst die Auftragseinheit 10a eine im Wesentlichen vertikal ausgerichtete, in Richtung einer Schmalseite eines Werkstücks W weisende Basisfläche 11a, in deren Bereich die zumindest eine Austrittsöffnung für die am Werkstück W aufzubringende Masse M ausgebildet ist. Ferner umfasst die Auftragseinheit 10a geneigte Flächen 12a, 13a, die sich ausgehend von der Basisfläche 11a unter Ausbildung eines Winkels von beispielsweise 45° erstrecken.

Die Auftragseinheit 10a umfasst gemäß der vorliegenden Ausführungsform einen Basisabschnitt 18a, der die zum Werkstück weisende Basisfläche 11a aufweist, sowie einen oberen Justierabschnitt 16a mit der geneigten Fläche 12a sowie einen unteren Justierabschnitt 17a mit einer geneigten Fläche 13a. Der obere Justierabschnitt 16a und der untere Justierabschnitt 17a können jeweils relativ zum Basisabschnitt 18a teleskopartig bewegt werden. Auf diese Weise ändert sich die Höhe der zum Werkstück weisenden Basisfläche.

Alternativ ist es möglich, ein Element der Auftragseinheit mit bestimmten geneigten Flächen 12a, 13a mit einer anderen Element mit anderen Dimensionen zu ersetzen. Auf diese Weise kann ein Aufbringbereich eingestellt bzw. variiert werden.

In einem Bereich der geneigten Flächen 12a gemäß der in Figur 2 dargestellten Ausführungsform nähert sich ein in Durchlaufrichtung gefördertes Werkstück W den geneigten Flächen 12a, 13a der Auftragseinheit 10a an oder berührt diese, so dass zwischen der Schmalseite des Werkstücks W, der Basisfläche 11a sowie Teilbereichen der geneigten Flächen 12a, 13a der Auftragseinheit 10a ein in Durchlaufrichtung D vor und hinter der Auftragseinheit 10a offener Volumenbereich 15a ausgebildet wird.

In diesem Volumenbereich 15a wird durch die Auftragseinheit 10a die an einer Schmalseite des Werkstücks W aufzubringende, bevorzugt pastöse, Masse eingedrückt und während der Relativbewegung zwischen Werkstück W und Auftragseinheit 10a an die Schmalseite des Werkstücks W übergeben.

Bei der in Figur 2 dargestellten Ausführungsform der Auftragseinheit 10a werden mittels der geneigten Flächen 12a, 13a beim Auftragen der Masse M Fasen im jeweiligen Eckbereich der Schmalseite des Werkstücks W eingebracht.

Nachdem die Auftragseinheit 10a den oberen Justierabschnitt 16a mit der geneigten Fläche 12a sowie den unteren Justierabschnitt 17a mit einer geneigten Fläche 13a aufweist, die teleskopartig in Relation zum Basisabschnitt 18a verstellt werden können, kann der Aufbringbereich der Auftragseinheit eingestellt werden.

Ferner kann die Position eines Werkstücks quer zur Durchlaufrichtung variiert werden. Wird beispielsweise ein Werkstücks mit geringerer Dicke in den Bereich der Auftragseinheit 10a geführt als ein vorangegangenes Werkstück, so wird das genannte Werkstück mit geringerer Dicke versetzt auf die (nicht dargestellte) Fördereinrichtung aufgelegt, so dass die Ecken der Schmalseite des Werkstücks mit den geneigten Flächen 12a, 13a in Kontakt kommen oder sich diesen annähern. Auf diese Weise wird der Volumenbereich 15a in vertikaler Richtung verkleinert. Um die Dicke der aufzubringenden Masse beizubehalten, können die Justierabschnitte 16a, 17a verstellt werden.

Die in Figur 2 dargestellte Andruckrolle 20 dient dazu, durch Aufbringen einer zusätzlichen Andruckkraft die Anhaftung der Masse einer Schmalseite des Werkstücks zu verbessern und ggf. die Oberfläche weiter zu vergüten bzw. zu glätten.

Gemäß einer weiteren Modifikation der vorliegenden Erfindung (siehe Fig. 3) wird eine Auftragseinheit 10b bereitgestellt, die anstelle der geneigten Flächen 12a, 13a (und/oder zusätzlich zu diesen) gekrümmte Flächen 12b, 13b aufweist, die mit den Ecken eines Werkstücks W im Bereich der Schmalseite annähernd oder vollständig in Kontakt gelangen. Zwischen den gekrümmten Flächen 12b, 13b erstreckt sich eine Basisfläche 11b. Mittels der gekrümmten Flächen 12b, 13b kann somit im Bereich der Ecken der Schmalseite jeweils ein Radius ausgebildet werden.

Ferner ist entsprechend der in Figur 2 dargestellten Ausführungsform die Auftragseinheit 10b mehrteilig ausgebildet, und umfasst einen Basisabschnitt 18b sowie einen oberen Justierabschnitt 16b sowie einen unteren Justierabschnitt 17b. Der obere Justierabschnitt 16b und der untere Justierabschnitt 17b können jeweils teleskopartig relativ zum Basisabschnitt 18b bewegt werden. Auf diese Weise ändert sich die Höhe der zum Werkstück weisenden Basisfläche.

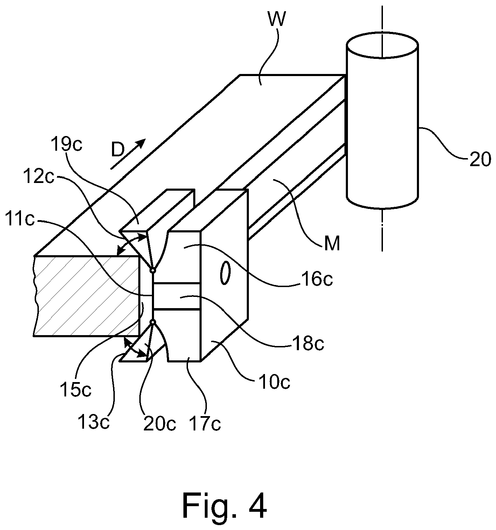

In Figur 4 wird eine weitere Ausführungsform der vorliegenden Erfindung schematisch dargestellt. Die Auftragseinheit 10c der in Figur 4 veranschaulichten Variante umfasst einen Basisabschnitt 18c mit einer zum Werkstück weisenden Basisfläche 11c sowie einen oberen Justierabschnitt 16c und einen unteren Justierabschnitt 17c. Der obere Justierabschnitt 16c ist mit einem ersten schwenkbaren Abschnitt 19c und der untere Justierabschnitt 17c ist mit einem zweiten schwenkbaren Abschnitt 20c versehen, wobei die schwenkbaren Abschnitte 19c, 20c relativ zum Basiskörper 18c der Auftragseinheit 10c um eine horizontale Achse geschwenkt werden können. Der erste schwenkbare Abschnitt 19c umfasst eine geneigte Fläche 12c, die mit einer oberen Ecke eines Werkstücks W vollständig oder annähernd in Kontakt gebracht wird. Ferner umfasst der zweite schwenkbare Abschnitt 20c eine geneigte Fläche 13c, die mit einer unteren Ecke eines Werkstücks W vollständig oder annähernd in Kontakt gebracht wird. Somit werden durch die Basisfläche 11c, die geneigten Flächen 12c, 13c und die Schmalseite des Werkstücks W ein Volumenbereich 15c ausgebildet.

Durch eine jeweilige Schwenkbewegung des ersten schwenkbaren Abschnitts 19c und des zweiten schwenkbaren Abschnitts 20c sowie eine vertikale Verstellbewegung der Justierabschnitte 16c, 17c kann der Volumenbereich 15c verändert werden. Auf diese Weise wird die Auftragseinheit 10c an unterschiedlich dicke Schmalseiten angepasst.

Gemäß einer anderen Modifikation umfasst die Auftragseinheit an dem in Durchlaufrichtung nachrangigen Bereich eine Strukturausbildungsmatratze, mit der die durch die Austrittsöffnung der Auftragseinheit in den Volumenbereich eingebrachte Masse im noch nicht ausgehärteten Zustand umgeformt wird. Auf diese Weise wird ermöglicht, eine wellenförmige Struktur in die Masse einzubringen.

Obwohl die vorliegenden Ausführungsformen primär im Hinblick auf eine Vorrichtung und ein Verfahren beschrieben wurden, bei denen ein Werkstück bewegt wird, während die Auftragseinheit und ggf. weitere Einrichtungen zumindest während des Aufbringens der Masse stationär angeordnet sind, kann die vorliegende Erfindung auch bei einer Vorrichtung und einem Verfahren zum Einsatz kommen, bei denen das Werkstück beispielsweise mittels Saugspanner oder Klemmspannern gehalten wird, während die Auftragseinheit und ggf. weitere Einrichtungen, die bevorzugt an einem gemeinsamen Schlitten befestigt sind, relativ zum Werkstück bewegt werden.

## Patentansprüche

1. Verfahren zur Schmalseitenbeschichtung an insbesondere plattenförmigen Werkstücken, welche Werkstücke insbesondere zumindest teilweise aus Holz, Holzwerkstoffen, Kunststoff oder einer Kombination hiervon bestehen, mit den Schritten:
- Herbeiführen einer Relativbewegung zwischen einem Werkstück (W) und einer Auftragseinheit (10, 10a-10c), welche Auftragseinheit (10, 10a-10c) zum Aufbringen einer Masse vorgesehen ist, wobei die Masse beispielsweise Kunststoff, Holzmaterial, wie Holzschaum, Holzmehl, Sägespäne oder Ähnlichem, Schaummaterial, eine metallische oder mineralische Paste, oder Kombinationen hieraus umfasst,
- Einstellen eines Aufbringbereichs zum Aufbringen der Masse in Abhängigkeit von der Breite der Schmalseite eines mit der Masse zu versehenden Werkstücks und
- Aufbringen der Masse an einer Schmalseite des Werkstücks (W) zur Ausbildung eines dreidimensionalen Körpers,
**dadurch gekennzeichnet, dass** die am Werkstück (W) aufgebrachte Masse mittels einer Andruckrolle (20) an das Werkstück (W) angedrückt und ggf. in Form gebracht wird.

2. Verfahren gemäß Anspruch 1, bei dem das Aufbringen der Masse an der Schmalseite des Werkstücks (W) mehrmals durchgeführt wird.

3. Verfahren gemäß Anspruch 1 oder 2, bei dem nach dem Aufbringen der Masse mit der Auftragseinheit (10, 10a-10c) eine Inkjet-Druckeinrichtung (50) eingesetzt wird, mit der das Werkstück (W) und/oder ein durch die Auftragseinheit (10) ausgebildeter dreidimensionaler Körper bedruckt oder mit Schicht, insbesondere einem Lack, versehen wird.

4. Verfahren gemäß einem der vorangegangenen Ansprüche, bei dem die am Werkstück (W) aufgebrachte Masse mittels der Andruckrolle (20) zusätzlich mit einer Struktur versehen wird.

5. Verfahren gemäß einem der vorangegangenen Ansprüche, bei dem nach dem Aufbringen der Masse an einer Schmalseite des Werkstücks mittels der Auftragseinheit (10, 10a-10c) ein Veredelungsschritt (40) durchgeführt wird, insbesondere mittels einer Heizeinrichtung, einem UV-Strahler, einer Vorrichtung zum Extrudieren und Beschichten, einem Kaschieren, einem Reinigen, einem Entfetten, einem Verbessern der Haftungs- und Benetzungseigenschaften und einem Vermindern der elektrostatischen Aufladung.

6. Verfahren gemäß einem der vorangegangenen Ansprüche, bei dem das Werkstück (W) einem oder mehreren Vorbehandlungsschritten (30) unterzogen wird, insbesondere einem Vorreinigen, einem Entfetten, einem Verbessern der Haftungs- und Benetzungseigenschaften und einem Vermindern der elektrostatischen Aufladung.

7. Verfahren gemäß einem der vorangegangenen Ansprüche, bei dem die Relativbewegung zwischen dem Werkstück (W) und der Auftragseinheit (10, 10a-10c) kontinuierlich oder diskontinuierlich durchgeführt wird, während die Auftragseinheit (10, 10a-10c) die Schmalseite des Werkstücks (W) mit der Masse versieht.

8. Vorrichtung zur Schmalflächenbeschichtung an insbesondere plattenförmigen Werkstücken (W), welche Werkstücke (W) insbesondere zumindest teilweise aus Holz, Holzwerkstoffen, Kunststoff oder einer Kombination hiervon bestehen, aufweisend:
eine Auftragseinheit (10, 10a-10c) zum Aufbringen einer Masse, welche Masse beispielsweise Kunststoff, Holzmaterial, wie Holzschaum, Holzmehl, Sägespäne oder Ähnlichem, eine metallische oder mineralische Paste, oder Kombinationen hieraus umfasst,
wobei die Auftragseinheit (10, 10a-10c) zur Aufbringung der Masse an einer Schmalseite eines Werkstücks (W) eingerichtet ist, und ein Aufbringungsbereich der Auftragseinheit (10, 10a-10c) in Abhängigkeit von der Breite der Schmalseite des Werkstücks einstellbar ist,
eine Zuführeinrichtung (60) zur Zuführung einer Masse zur Auftragseinheit (10, 10a-10c), und
eine Vorrichtung zur Herbeiführung einer Relativbewegung zwischen einem Werkstück und der Auftragseinheit, **gekennzeichnet durch** eine Andruckrolle (20) zum Andrücken der Masse an die Schmalseite des Werkstücks.

9. Vorrichtung gemäß Anspruch 8, bei der die Auftragseinheit (10, 10a-10c) mindestens eine Düsenanordnung aufweist, welche mindestens abschnittsweise die Schmalseite mit der Masse beaufschlagt, wobei die Düsenanordnung vorzugsweise horizontal angeordnet ist.

10. Vorrichtung gemäß Anspruch 8 oder 9, ferner umfassend eine Speichereinrichtung (70) zur Aufnahme der Masse, die mit der Zuführeinrichtung verbunden ist, wobei die Speichereinrichtung eine Heizeinrichtung aufweist.

11. Vorrichtung gemäß einem der Ansprüche 8-10, bei der die Auftragseinheit (10, 10a-10c) in eine Werkzeugaufnahme einwechselbar ist.

12. Vorrichtung gemäß einem der Ansprüche 8-11, bei der ein Bearbeitungswerkzeug, insbesondere ein Fräser oder eine Ziehklinge, und die Auftragseinheit an einem gemeinsamen Schlitten angebracht sind, der entlang einer Führung verfahrbar ist.

13. Vorrichtung gemäß einem der Ansprüche 8-12, **dadurch gekennzeichnet, dass** die Auftragseinheit (10a-10c) einen Basisabschnitt (18a-18c), einen ersten Justierabschnitt (16a-16c) sowie einen zweiten Justierabschnitt (17a-17c) aufweist, wobei der erste Justierabschnitt (16a-16c) und der zweite Justierabschnitt (17a-17c) jeweils relativ zum Basisabschnitt (18a-18c) verstellt werden können, um den Aufbringungsbereich der Auftragseinheit einzustellen.

14. Vorrichtung gemäß Anspruch 13, **dadurch gekennzeichnet, dass** der erste Justierabschnitt (16a-16c) eine gegenüber einer Basisfläche (11a-11c) des Basisabschnitts (18a-18c) geneigte Fläche (12a; 12c) oder gekrümmte Fläche (12b) und der zweite Justierabschnitt (17a-17c) eine gegenüber einer Basisfläche (11a-11c) des Basisabschnitts (18a-18c) geneigte Fläche (13a; 13c) oder gekrümmte Fläche (13b) aufweist, wobei die geneigten Flächen (12a; 12c; 13a; 13c) bzw. gekrümmten Flächen (12b; 13b) bevorzugt relativ zum Basisabschnitt (18a-18c) schwenkbar sind.

## Claims

1. Method for edge coating in particular panel-formed workpieces, said workpieces consisting in particular at least partially of wood, wood-based materials, plastic or a combination thereof, with the steps:
- bringing about a relative movement between a workpiece (W) and an applicator unit (10, 10a-10c), said applicator unit (10, 10a-10c) being provided for the application of a compound, wherein the compound comprises, for example, plastic, wood material such as wood foam, wood flour, sawdust or the like, foam material, a metallic or mineral paste, or combinations thereof,
- adjusting an application area for application of the compound depending on the width of the edge of a workpiece to which the compound is to be applied, and
- applying the compound to an edge of the workpiece (W) in order to form a three-dimensional body,
**characterised in that** the compound applied to the workpiece (W) is pressed onto the workpiece (W) and, if necessary, formed by means of a pressure roller (20).

2. Method according to claim 1, in which the application of the compound to the edge of the workpiece (W) is carried out several times.

3. Method according to claim 1 or 2, in which, following the application of the compound by means of the applicator unit (10, 10a- 10c), an inkjet printing device (50) is used with which the workpiece (W) and/or a three-dimensional body formed by the applicator unit (10) is printed or provided with a coating, in particular a varnish.

4. Method according to one of the preceding claims, in which the compound applied to the workpiece (W) by means of the pressure roller (20) is additionally provided with a structure.

5. Method according to one of the preceding claims, in which, following the application of the compound on an edge of the workpiece by means of the applicator unit (10, 10a-10c) a finishing step (40) is carried out, in particular by means of a heating device, a UV lamp, a device for extruding and coating, a lamination, a cleaning, a degreasing, an improvement in the adhesive and wetting properties and a reduction of the electrostatic charge.

6. Method according to one of the preceding claims, in which the workpiece (W) is subjected to one or more pretreatment steps (30), in particular a pre-cleaning, a degreasing, an improvement in the adhesive and wetting properties and a reduction of the electrostatic charge.

7. Method according to one of the preceding claims, in which the relative movement between the workpiece (W) and the applicator unit (10, 10a-10c) is carried out continuously or discontinuously while the applicator unit (10, 10a-10c) applies the compound to the edge of the workpiece (W).

8. Device for edge coating in particular panel-formed workpieces (W), said workpieces (W) in particular consisting at least partially of wood, wood-based materials, plastic or a combination thereof, comprising:
an applicator unit (10, 10a-10c) for applying a compound, said compound comprising, for example, plastic, wood material such as wood foam, wood flour, sawdust or the like, a metallic or mineral paste, or combinations thereof,
wherein the applicator unit (10, 10a-10c) is configured for applying the compound to an edge of a workpiece (W), and an application area of the applicator unit (10, 10a-10c) is adjustable depending on the width of the edge of the workpiece,
a feed arrangement (60) for feeding a compound to the applicator unit (10, 10a-10c), and
a device for bringing about a relative movement between a workpiece and the applicator unit, **characterised by** a pressure roller (20) for pressing the compound onto the edge of the workpiece.

9. Device according to claim 8, wherein the applicator unit (10, 10a-10c) has at least one nozzle arrangement which applies the compound at least to sections of the edge, wherein the nozzle arrangement is preferably arranged horizontally.

10. A device according to claim 8 or 9, further comprising a storage device (70) for receiving the compound which is connected to the feed arrangement, wherein the storage device has a heating device.

11. Device according to one of the claims 8-10, wherein the applicator unit (10, 10a-10c) can be exchanged into a tool holder.

12. Device according to one of the claims 8-11, wherein a machining tool, in particular a cutter or a scraper, and the applicator unit are mounted on a common carriage which can be moved along a guide.

13. Device according to one of the claims 8-12, **characterised in that** the applicator unit (10a-10c) has a base section (18a-18c), a first adjustment section (16a-16c) and a second adjustment section (17a-17c), wherein the first adjustment section (16a-16c) and the second adjustment section (17a-17c) can in each case be adjusted relative to the base section (18a-18c) in order to adjust the application area of the applicator unit.

14. Device according to claim 13, **characterised in that** the first adjustment section (16a-16c) has a surface which is inclined (12a; 12c) or curved (12b) in relation to a base surface (11a-11c) of the base section (18a- 18c) and the second adjustment section (17a-17c) has a surface which is inclined (11a-11c) or curved (13b) in relation to the base section (18a-18c), wherein the inclined surfaces (12a; 12c; 13a; 13c) or curved surfaces (12b; 13b) are preferably swivelable relative to the base section (18a-18c).

## Revendications

1. Procédé de revêtement de chants sur des pièces, en particulier en forme de plaque, lesquelles consistent en particulier au moins partiellement en du bois, des matériaux à base de bois, de la matière plastique ou une combinaison de ceux-ci, comprenant les étapes ci-dessous consistant à :
- provoquer un mouvement relatif entre une pièce (W) et une unité d'application (10, 10a à 10c), laquelle unité d'application (10, 10a à 10c) est conçue pour appliquer une masse, dans lequel la masse comprend par exemple du plastique, un matériau à base de bois, comme de la mousse de bois, de la farine de bois, de la sciure ou similaire, un matériau à base de mousse, une pâte métallique ou minérale, ou des combinaisons de ceux-ci,
- ajuster une région d'application en vue de l'application de la masse en fonction de la largeur du chant d'une pièce à munir de la masse, et
- appliquer la masse sur un chant de la pièce (W) afin de réaliser un corps tridimensionnel,
**caractérisé en ce que** la masse appliquée sur la pièce (W) est pressée, et éventuellement mise en forme, contre la pièce (W) au moyen d'un rouleau presseur (20).

2. Procédé selon la revendication 1, dans lequel l'application de la masse sur le chant de la pièce (W) est mise en œuvre plusieurs fois.

3. Procédé selon la revendication 1 ou 2, dans lequel, après l'application de la masse avec l'unité d'application (10, 10a à 10c), un dispositif d'impression à jet d'encre (50) est utilisé, avec lequel la pièce (W) et/ou un corps tridimensionnel réalisé grâce à l'unité d'application (10) est imprimé(e) ou muni(e) d'une couche, en particulier d'une laque.

4. Procédé selon l'une quelconque des revendications précédentes, dans lequel la masse appliquée sur la pièce (W) est en outre munie d'une structure au moyen du rouleau presseur (20).

5. Procédé selon l'une quelconque des revendications précédentes, dans lequel, après l'application de la masse sur un chant de la pièce au moyen de l'unité d'application (10, 10a à 10c), une étape de finition (40) est mise en œuvre, en particulier au moyen d'un appareil de chauffage, d'un radiateur UV, d'un dispositif d'extrusion et de revêtement, d'une stratification, d'un nettoyage, d'un dégraissage, d'une amélioration des propriétés d'adhérence et de mouillage et d'une réduction de la charge électrostatique.

6. Procédé selon l'une quelconque des revendications précédentes, dans lequel la pièce (W) est soumise à une ou plusieurs étape(s) de prétraitement (30), en particulier un prénettoyage, un dégraissage, une amélioration des propriétés d'adhérence et de mouillage et une réduction de la charge électrostatique.

7. Procédé selon l'une quelconque des revendications précédentes, dans lequel le mouvement relatif entre la pièce (W) et l'unité d'application (10, 10a à 10c) est mis en œuvre de manière continue ou discontinue pendant que l'unité d'application (10, 10a à 10c) munit le chant de la pièce (W) de la masse.

8. Dispositif de revêtement de surfaces étroites sur des pièces (W), en particulier en forme de plaque, lesquelles pièces (W) consistent en particulier au moins partiellement en du bois, des matériaux à base de bois, de la matière plastique ou une combinaison de ceux-ci, présentant :
une unité d'application (10, 10a à 10c) permettant d'appliquer une masse, laquelle masse comprend par exemple du plastique, un matériau à base de bois, comme de la mousse de bois, de la farine de bois, de la sciure ou similaire, une pâte métallique ou minérale, ou des combinaisons de ceux-ci,
dans lequel l'unité d'application (10, 10a à 10c) est conçue pour appliquer la masse sur un chant d'une pièce (W), et une région d'application de l'unité d'application (10, 10a à 10c) peut être ajustée en fonction de la largeur du chant de la pièce,
un appareil d'alimentation (60) permettant d'alimenter une masse vers l'unité d'application (10, 10a à 10c), et
un dispositif permettant de provoquer un mouvement relatif entre une pièce et l'unité d'application, **caractérisé par** un rouleau presseur (20) permettant de presser la masse contre le chant de la pièce.

9. Dispositif selon la revendication 8, dans lequel l'unité d'application (10, 10a à 10c) présente au moins un agencement de buses, lequel applique la masse au moins par sections sur le chant, dans lequel l'agencement de buses est de préférence agencé horizontalement.

10. Appareil selon la revendication 8 ou 9, comprenant en outre un appareil de stockage (70) permettant d'accueillir la masse, qui est relié à l'appareil d'alimentation, dans lequel l'appareil de stockage présente un appareil de chauffage.

11. Dispositif selon l'une quelconque des revendications 8 à 10, dans lequel l'unité d'application (10, 10a à 10c) peut être remplacée au sein d'un porte-outil.

12. Dispositif selon l'une quelconque des revendications 8 à 11, dans lequel un outil d'usinage, en particulier une fraise ou une lame d'étirage, et l'unité d'application sont montés sur un chariot commun pouvant être déplacé le long d'un guide.

13. Appareil selon l'une quelconque des revendications 8 à 12, **caractérisé en ce que** l'unité d'application (10a à 10c) présente une section de base (18a à 18c), une première section d'ajustement (16a à 16c) et une seconde section d'ajustement (17a à 17c), dans lequel la première section d'ajustement (16a à 16c) et la seconde section d'ajustement (17a à 17c) peuvent respectivement être réglées par rapport à la section de base (18a à 18c) afin d'ajuster la région d'application de l'unité d'application.

14. Dispositif selon la revendication 13, **caractérisé en ce que** la première section d'ajustement (16a à 16c) présente une surface inclinée (12a ; 12c), ou une surface courbe (12b), par rapport à une surface de base (11a à 11c) de la section de base (18a à 18c) et la seconde section d'ajustement (17a à 17c) présente une surface inclinée (13a ; 13c), ou une surface courbe (13b), par rapport à une surface de base (11a à 11c) de la section de base (18a à 18c), dans lequel les surfaces inclinées (12a ; 12c ; 13a ; 13c) ou les surfaces courbes (12b ; 13b) peuvent de préférence pivoter par rapport à la section de base (18a à 18c).
